## Europäisches Patentamt

## European Patent Office

## Office européen des brevets

(19)

(11) Veröffentlichungsnummer: **0 102 938**

**A2**

(12) **EUROPÄISCHE PATENTANMELDUNG**

(21) Anmeldenummer: **83890092.6**

(22) Anmeldetag: **01.06.83**

(51) Int. Cl.³: **F 16 H 15/42**

(30) Priorität: **08.06.82 AT 2219/82**
**16.05.83 AT 1798/83**

(43) Veröffentlichungstag der Anmeldung:
**14.03.84 Patentblatt 84/11**

(84) Benannte Vertragsstaaten:
**BE CH DE FR GB IT LI LU ·NL SE**

(71) Anmelder: **Maichen, Karl**
**Thaläckerstrasse 12**
**A-6923 Lauterach(AT)**

(72) Erfinder: **Maichen, Karl**
**Thaläckerstrasse 12**
**A-6923 Lauterach(AT)**

(74) Vertreter: **Köhler-Pavlik, Johann, Dipl.-Ing.**
**Margaretenplatz 5**
**A-1050 Wien(AT)**

(54) **Reibradgetriebe.**

(57) Reibradgetriebe, bei welchem koaxial gegenüberliegend zwei kegelförmige Reibscheiben (4, 4A) mit ihrem verjüngten Ende einander gegenüberstehen. Die eine Scheibe ist mit einem Antrieb verbunden, während die andere als abtreibende Scheibe wirkt. Zur Übertragung des Drehmomentes von der antreibenden auf die abtreibende Scheibe ist ein Reibring (14) vorgesehen, welcher an verschiedenen diametral gegenüberliegenden Stellen an den Scheiben anliegt. Der Reibring (14) ist auf einem Tragring (20, 20A) drehbar gelagert, der auf einer Halterung (11, 11A) angeordnet ist. Der Tragring (20, 20A) ist gegenüber der Halterung (11, 11A) verdrehbar und an der Halterung (11, 11A) an mindestens zwei in Winkelabständen voneinander liegenden Stellen mittels je eines Wälzkörpers (11', 11A') abgestützt, wobei der Tragring (20, 20A) oder die Halterung (11, 11A) für jeden Wälzkörpers eine in Umfangsrichtung verlaufende Nut (11", 11A") aufweist, deren Tiefe zu mindestens einem Ende hin allmählich abnimmt.

FIG. 2

EP 0 102 938 A2

## Reibradgetriebe

Die Erfindung betrifft ein Reibradgetriebe mit stufenlos veränderbarem Übersetzungsverhältnis, mit je einer antreibbaren und einer abtreibenden flach- kegeligen Reibscheibe, welche Reibscheiben gleichachsig und mit ihren konvexen Seiten einander zugewendet sind, mit einem die Achse der Reibscheiben umgebenden, entlang der Erzeugenden der Reibscheiben verschiebbaren Reibring und mit einer Einrichtung zum Anpressen des Reibringes an die Reibscheiben, wobei der Reibring an einem Tragring drehbar gelagert ist und der Tragring auf einer parallel zu der Erzeugenden der Reibscheiben verschiebbaren Halterung angeordnet ist.

Ein derartiges Getriebe wird beispielsweise in der DE-PS 107 562 beschrieben. Dieses bekannte Reibradgetriebe hat vorwiegend den Nachteil, daß nach längerem Betrieb durch Abnutzung der Reibteile die Anpreßkraft des Reibringes an den Abwälzflächen nachläßt, wodurch die Drehmomentenübertragung beeinträchtigt wird.

Aufgabe der vorliegenden Erfindung ist die Schaffung von Maßnahmen, durch welche unter Vermeidung des zuvor geschilderten Nachteiles eine stets ausreichende Kräfteübertragung aller Getriebeteile gesichert wird.

Diese Aufgabe wird bei einem Getriebe der einleitend erwähnten Art erfindungsgemäß dadurch erreicht, daß der Tragring gegenüber der Halterung verdrehbar ist und an der Halterung an mindestens zwei in Winkelabständen voneinander liegenden Stellen mittels je eines Wälzkörpers abgestützt ist und daß der Tragring oder die Halterung für jeden Wälzkörper eine in Umfangsrichtung verlaufende Nut aufweist, deren Tiefe zu mindestens einem Ende hin allmählich abnimmt.

Das erfindungsgemäße Reibradgetriebe ist vielfach anwendbar. Es kann z.B. in Fahrräder, Motorräder, mehrspurige Kraftfahrzeuge, Werkzeugmaschinen u.a. Maschinen und Einrichtungen der Technik eingebaut werden. Es eignet sich infolge seiner vorteilhaften Ausbildung auch zur zumindest teilweisen Herstellung aus Kunststoff.

In der Zeichnung sind vier Ausführungsbeispiele des erfindungsgemäßen Reibradgetriebes dargestellt. Es zeigen

Figur 1 eine Seitenansicht,
Figur 2 einen Längsschnitt und
Figur 3 eine Stirnansicht einer ersten Ausführungsform des Reibradgetriebes zur beispielsweisen Anwendung desselben für ein Zweirad, z.B. für ein Fahrrad,

Figur 4     eine geänderte Ausführungsform eines
            Einzelteiles der Figur 1,

Figur 5     eine weitere Ausführungsform des Getriebes nach Figur 1 im Längsschnitt,

Figur 6     eine Seitenansicht des Getriebes nach
            Figur 5,

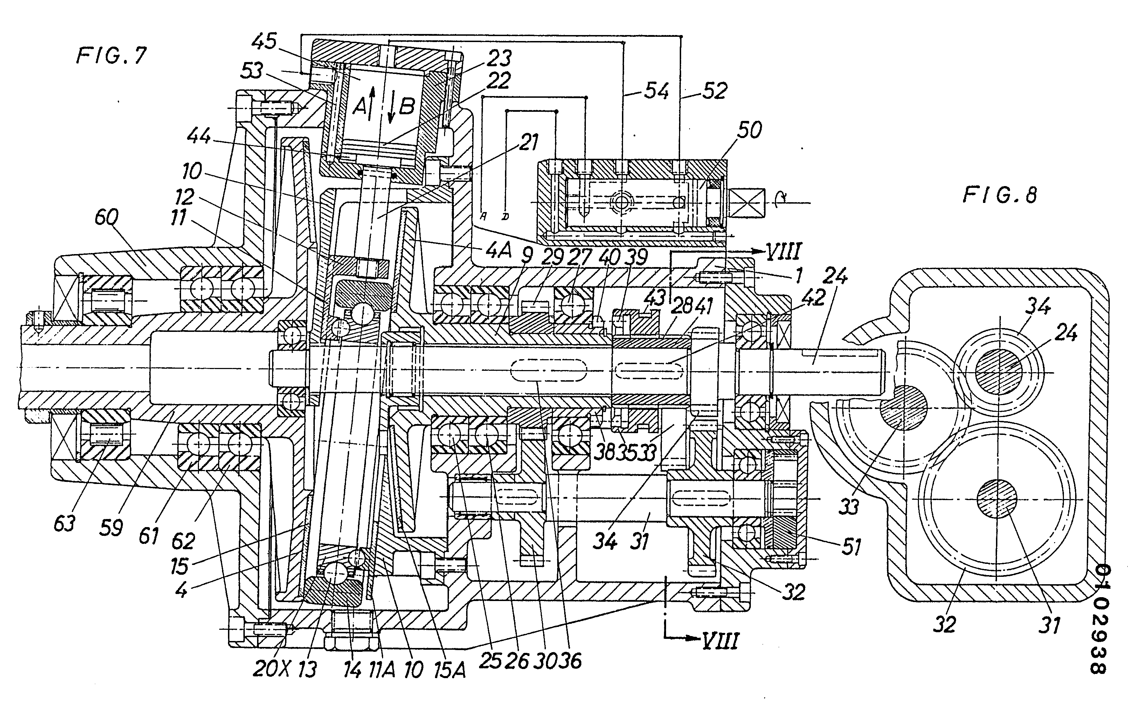

Figur 7     einen Längsschnitt einer zweiten Ausführungsform des Reibradgetriebes für
            eine beispielsweise Anwendung für ein
            Fahrzeug oder eine Industrieanwendung,
            z.B. eine Werkzeugmaschine,

Figur 8     einen Schnitt nach der Linie VIII-VIII
            der Figur 7,

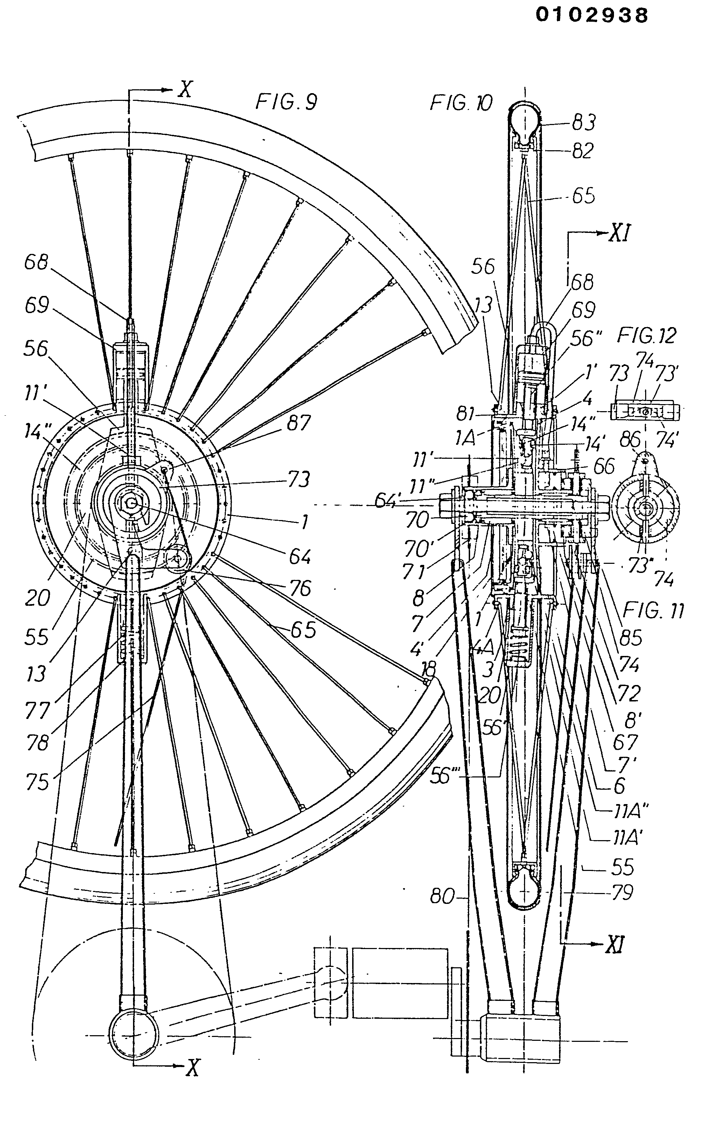

Figur 9     eine Stirnansicht einer weiteren Aus-
            führungsform des erfindungsgemäßen Ge-
            triebes zur Verwendung als Radnabenreib-
            radgetriebe,

Figur 10    einen Längsschnitt nach der Linie X-X
            der Figur 9,

Figur 11    einen Längsschnitt nach der Linie XI-XI
            der Figur 10 und

Figur 12    eine Ansicht in der Richtung des Pfeiles
            A in Figur 11.

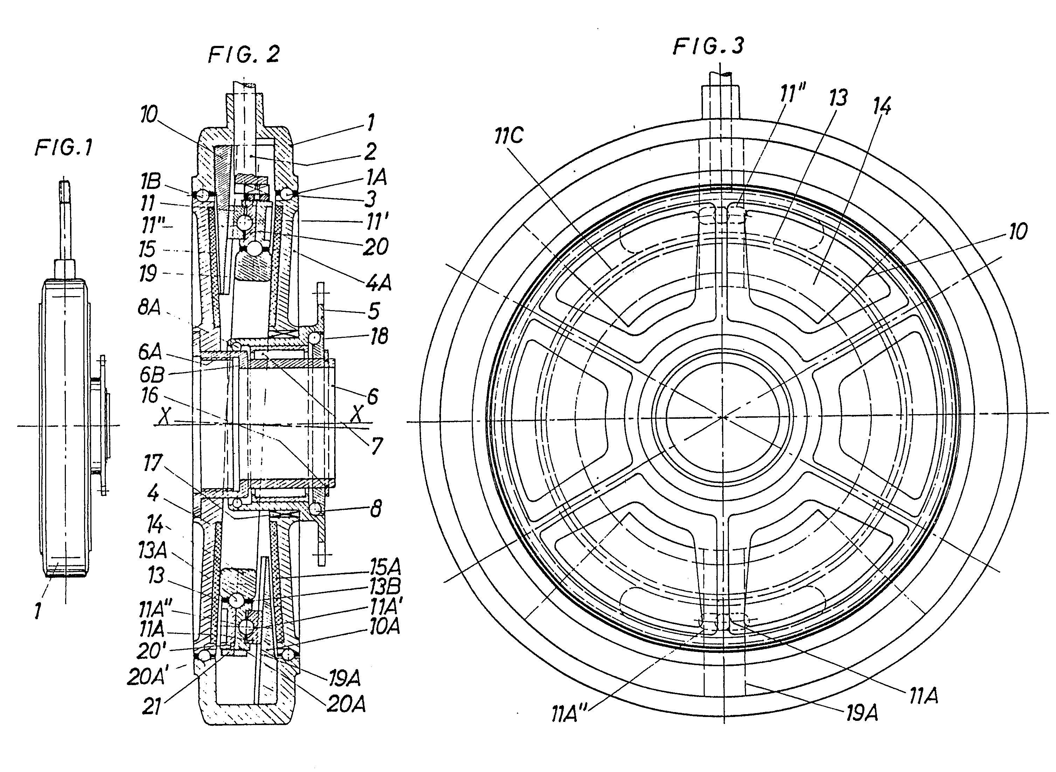

Beim Reibradgetriebe nach den Figuren 1 bis 3 bezeichnet 6 eine Buchse, mit welcher das Getriebe z.B.
auf eine nicht dargestellte Nabe eines Zweiradfahrzeuges aufgeschraubt wird. Zu diesem Zwecke dient ein
Innengewinde 6A mit welchem die Buchse 6 auf ein
korrespondierendes Außengewinde der Nabe aufgeschraubt
wird bis ein Anschlag der Nabe auf einem Anschlag 6B
der Buchse 6 zum Anliegen kommt. Die Buchse 6 ist aus
Stahl gefertigt und in einer aus Kunststoff bestehenden abtreibenden Reibscheibe 4 eingegossen, in welcher ein Reibbelag 15 eingebaut ist, der aus einem Fellstoff besteht, wie er bei Kupplungen und Bremsen Verwendung findet. Zur abtreibenden Reibscheibe 4 ist spiegelbildlich eine ebenfalls mit einem Reibbelag 15A ausgestattete antreibbare Reibscheibe 4A angeordnet, welche über einen Freilauf 17 auf einer Antriebshülse 5 sitzt, die als Kettenrad ausgebildet ist, in welches die Fahrradkette eingreift. Die wirksamen Oberflächen der beiden Reibbeläge 15, 15A laufen gegen die Drehachse X-X des Getriebes hin zusammen.

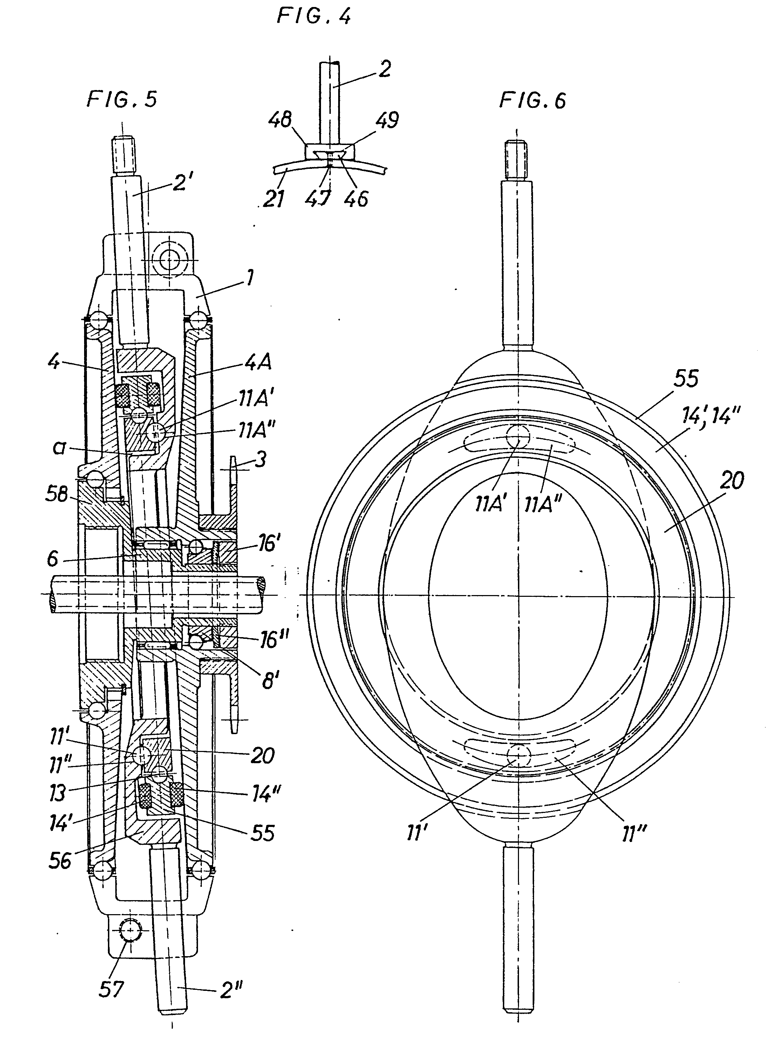

Die Antriebshülse 5 ist auf die Buchse 6 über ein Axiallager 8 mit einer, die axialen Kräfte aufnehmenden und durch einen Seegerring 16 axial gehaltenen und in der Axialrichtung vorgespannten Lagerplatte 18 sowie ein Radiallager 8A gelagert. Im Mittelbereich stützt sich die Hülse 5 über ein Nadellager 7 auf der Buchse 6 ab. Ein geschlossenes Gehäuse 1 stützt sich über Kugellager 1A, 1B, an der antreibbaren, bzw. an der abtreibenden Reibscheibe 4A bzw. 4 ab, wobei die Kugeln in einem Kugelkäfig 3 gelagert sind. Die Lager in den Reibscheiben 4A bzw. 4 sind als Schulterlager ausgebildet, während die Lager im Gehäuse 1 als Rillenlager ausgebildet sind. Im Gehäuse 1 ist an zwei einander spiegelbildlich diametral gegenüberliegenden Stellen je ein aus Stahl bestehender Lappen 10 bzw. 10A eingegossen, welcher mittig und radial je eine Führungsnut 19 bzw. 19A besitzt, in welcher eine Halterung in Form eines Gleitschuhs 11 bzw. 11A gelagert ist. Die Führungsnuten 19, 19A bzw. die Gleitflächen der Lappen 10, 10A für die Gleitschuhe 11 und 11A verlaufen jeweils parallel zu der jeweils gegenüberliegenden Oberfläche der Reibbeläge 15, 15A. Der Gleitschuh 11 bzw. 11A ist für die Aufnahme eines Wälzkörpers beispielsweise als Kugelpfanne ausgebildet, in welcher eine Kugel 11', 11A' sitzt. Die beiden Kugeln 11', 11A' können sich in einer in Umfangsrichtung verlaufenden Nut bzw. in einer Kugelbahn 11", 11A" bewegen, welche in einem Tragring 20, 20A vorgesehen ist, wobei die Tiefe der Nut zu mindestens einem Ende hin allmählich abnimmt. Die beiden Tragringe 20, 20A liegen Rücken an Rücken aneinander, wobei der Tragring 20A mit einem am äußeren Rand umlaufenden Vorsprung 20A' in eine korrespondierende Nut 20' des anderen Tragringes 20 eingreift. Die Tragringe 20, 20A sind außenseitig von einem Stahlband 21 umschlossen, das mit einer Verstelleinrichtung, z.B. einem Schaltbolzen 2 verbunden ist. Die Verbindung zwischen Stahlband 21 und Schaltbolzen 2 kann in beliebiger Weise erfolgen. Bei einer Ausführungsform nach Figur 4 ist eine Feder-Nut-Verbindung vorgesehen, bei welcher am Stahlband 21 ein im Querschnitt schwalbenschwanzförmiges Profil 46 durch Nieten 47 befestigt ist, auf welches der Schaltbolzen 2 mit einer Schiene 48 aufgeschoben ist, welche eine zum Profil 46 kongruente Nut 49 aufweist. Die Tragringe 20, 20A können sich im Stahlband drehen und durch dieses bzw. den Hebel 2 in beiden Radialrichtungen hin verschoben werden. Die Tragringe 20, 20A sitzen über ein Kugellager 13 auf einem Reibring 14, welcher sich einerseits an der antreibbaren Reibscheibe 4A und spiegelbildlich diametral gegenüberliegend an der abtreibenden Reibscheibe 4 abstützt. Die Kugeln 13A des Kugellagers 13 sind von einem Käfig 13B gehalten.

Im Betrieb wird durch die Antriebshülse 5 in der Vorwärtsrichtung über den Freilauf 17 die antreibbare Reibscheibe 4A mitgenommen, welche über den Belag 15A den Reibring 14 antreibt, der über die abtreibende Reibscheibe 4 die Hülse 6 mitnimmt. Durch den Abtriebswiderstand baut sich im Reibring 14 eine Reaktions- bzw. Gegenkraft auf, die über das Kugellager 13 auf die Ringe 20, 20A übertragen werden, welche sich so weit verdrehen, daß die Kugeln 11', 11A' am Ende der Nut 11", 11A" auflaufen und auf die beiden Ringe 20, 20A einen Druck ausüben, so daß ein spielfreies Anpressen des Ringes 14 an beiden Reibbelägen 15, 15A stattfindet, wodurch der nötige Anpreßdruck erzeugt wird und allfällige Abnützungen der Reibteile ausgeglichen werden.

Das Reibradgetriebe nach den Figuren 5 und 6 entspricht im wesentlichen dem Reibradgetriebe nach den Figuren 1 bis 3 mit dem Unterschied, daß der vorzugsweise aus Kunststoff bestehende Reibring 14 in zwei Reibringe 14', 14" unterteilt ist, welche von einem Stützring 55 getragen sind, an dem sich innenseitig ein einteiliger Tragring 20 über das Kugellager 13 abstützt, welcher seinerseits über die Kugeln 11', 11A' an zwei diametral und spiegelbildlich gegenüberliegenden Stellen einer Halterung in Form eines Anpreßteils 56 abgestützt ist, welcher an die Stelle der früher erwähnten Gleitschuhe 11, 11A tritt und zur Führung der Kugel 11', 11A' Kurvenbahnen bzw. die Nuten 11", 11A" aufweist. Die beiden Anpreßteile sind beim vorliegenden Ausführungsbeispiel zu einem gemeinsamen Körper verbunden. An Stelle der Führungsnuten 19, 19A treten diametral gegenüberliegende Bolzen 2', 2", die im Gehäuse 1 parallel zur Kegelerzeugenden verschiebbar geführt sind und mit dem Anpreßteil 56 einen starren Körper bilden. Einer dieser Bolzen, im vorliegenden Falle der Bolzen 2' ist mit der Schalt- oder Verstelleinrichtung zur radialen Einstellung der Reibringe 14', 14" verbunden. Das Gehäuse 1 ist, wie dargestellt, zweiteilig ausgebildet und durch Schrauben 57 zusammengehalten.

Die abtreibende Reibscheibe 4 ist mit einem Klinkenfreilauf 58 verbunden, von dem die früher erwähnte
Buchse 6 als Fortsatz ausgeht, auf dem die antreibbare Reibscheibe 4A über ein Stützlager 8' gelagert ist,
das durch eine Tellerfeder 16" und eine Mutter 16'
belastet ist.

Die erforderliche Anpreßkraft für den Reibschluß wird
außer der Steigung der Kurvenbahn 11" bzw. 11A" noch
durch die zusätzliche Abdrängkraft des Stützmomentes
der Reibringe 14', 14" verstärkt. Der Abstand a,
zwischen Stützring 20 und Abstützteil 56 bestimmt
die Größe des Ausschwenkens der Reibringe in radialer
Richtung.

Bei der Ausführungsform des Reibradgetriebes nach
den Figuren 7 und 8 ist an Stelle der beiden früher
erwähnten Tragringe 20, 20A ein einziger Tragring
20X vorgesehen. An Stelle des Stahlbandes 21 ist
der eine Gleitschuh 11 mit einem Fortsatz 12 ausgebildet, in welchem ein Zapfen 21 eingeschraubt ist,
der mit einem hydraulischen Kolben 22 verbunden ist,
welcher in einem hydraulischen Zylinder 23 bewegbar
ist. Der Tragring 20X stützt sich außenseitig über
das Kugellager 13 an der Innenseite des Reibringes
14 ab. Der übrige Aufbau entspricht dem des zuvor
beschriebenen Ausführungsbeispieles.

Die antreibbare Reibscheibe 4A sitzt drehbar auf der
Antriebswelle 24 und ist über die Kugellager 25, 26,
27 im Gehäuse 1 gelagert, wobei sich die Kugellager
25, 26 an einem Zahnrad 29 abstützen, das mit einem
Zahnrad 30 kämmt, welches auf einer Vorgelegewelle
31 aufgekeilt ist, die ein für den Rückgang dienendes
Zahnrad 32 mitnimmt. Das Zahnrad 32 kämmt mit einem Zahnrad 33, das seinerseits mit einem Ritzel 34 kämmt, welches einen Teil der Antriebswelle 24 bildet. Mit der Antriebswelle 24 ist eine Hülse 41 mittels Keils 42 auf Drehung gekoppelt auf der eine Muffe 35 verschiebbar gelagert und durch eine Verzahnung 28 mitgedreht wird. Zwischen dem Kugellager 27 und der Nabe 9 der antreibbaren Reibscheibe 4A sitzt eine Hülse 38, die mit dem Zahnrad 29 durch einen Keil 36 auf Drehung gekoppelt ist, welcher in einer an der Außenseite der Nabe 9 vorgesehenen Nut sitzt. Die dargestellte Stellung der Muffe 35 ist eine Leergangsstellung, bei der sich die Antriebswelle 24 leer dreht. Wenn die Muffe 35 in der Zeichnung nach links verschoben wird, treten Klauen 39 der Muffe 35 mit Klauen 40 der Hülse 38 in Eingriff, wodurch die Antriebswelle 24 mit der antreibbaren Reibscheibe 4A gekoppelt wird. Das Zwischenrad 33 hat einen nicht dargestellten Hals, der mit einer ebenfalls nicht dargestellten Klaue in einer Nut 43 der Muffe 35 eingreift, so daß, wenn die Muffe 35 nach rechts verschoben wird, das Zwischenrad 33 in Verbindung mit dem Antriebsrad 34 tritt und auch das Zahnrad 32 mitnimmt, so daß die antreibbare Reibscheibe 4A über die Welle 31 in der umgekehrten Richtung mitgenommen wird.

Ein Drehschieber 50 verteilt die von einer Innenzahnradpumpe 51 kommende Druckflüssigkeit in die eine oder andere Kammer 44 bzw. 45 des Zylinders 23, und zwar in der Weise, daß die Druckflüssigkeit entweder über die Leitung 52 und den Kanal 53 unter den Kolben 22 gelangt und dieser in der Richtung des Pfeiles A oder über die Leitung 54 hinter den Kolben 22 gelangt und diesen in Richtung des Pfeiles B mitnimmt. Hiebei wirkt immer die jeweilige von der Druckflüssigkeit nicht durchströmte Leitung als Rückflußleitung. Mit 60 ist der Getriebedeckel bezeichnet, welcher über Kugellager 61, 62 und ein Walzenlager 63 auf der Abtriebshülse 59 aufsitzt, die als Nabe der abtreibenden Reibscheibe 4 ausgebildet ist.

Beim Reibradgetriebe nach den Figuren 9 bis 12 ist die Buchse auf einer Achse 64 aufgeschraubt. Die Achse 64 kann mit dem Rahmen 79 eines Fahrrades verbunden sein. Auf der Buchse 6 ist die antreibende und die abtreibende Reibscheibe 4A bzw. 4 gelagert. Die antreibende Reibscheibe 4 ist mit einem Lagerhals 4' verbunden und über das Nadellager 7, das Axiallager 8, sowie ein Kugellager 70 mit außenseitigem Kugelkäfig 70' und innenseitigem Konus 64' auf der Achse 64 drehbar gelagert. Der Antrieb erfolgt über ein Zahnritzel 71 mit eingebautem Leerlauf, welches im vorliegendem Falle von der nicht dargestellten Tretkurbel über eine Kette angetrieben wird.

Die antreibende sowie die abtreibende Reibscheibe 4A bzw. 4 bilden einen Teil des Getriebegehäuses 1, das umfangsseitig durch eine Wand 1' verschlossen ist, die quer an das äußere Ende der abtreibenden Reibscheibe 4 anschließt.

Die Wand 1' bildet einen Zylinder, in dessen Innenseite eine Lagerplatte 18 mittels eines Außengewindes 81 eingeschraubt ist. Ein Kugellager 1A mit Kugelkäfig 3 bilden das Außenlager für die antreibende Reibscheibe 4. Das Getriebegehäuse 1, welches als Radnabe ausgebildet, und mit der Lagerplatte 18 verschraubt ist, ist mittels Nadellager 7, 7' auf der Buchse 6 drehbar gelagert. Speichen 65, welche an der Wand 1' angeschlossen sind, tragen umfangsseitig eine Felge für einen Radmantel 83. Die abtreibende Reibscheibe 4 bildet die Trägerwand des Getriebegehäuses 1, welche einen Zylinderfortsatz 66 aufweist, in dem sich ein Druckkolben 67 befindet. Der Druckkolben 67 ist über ein Axiallager 8' mit einem Druckring 72 in Verbindung. Dieser Druckring 72 wird durch Verdrehen eines Steuerringes 73 in dem zwei Rollen 73" mit Achsen 73' gelagert sind, in axialer Richtung bewegt. Die Achsen 73' sind einerseits im Steuerring 73 und anderseits in einer um die Buchse 6 drehbar gelagerten Manschette 84 gelagert. Die Rollen 73" stützen sich an der Kurvenbahn 74' eines stationären Kurvenringes 74 ab, der über eine Lasche 85 am Rahmen 79 befestigt ist. Durch Verdrehen des Steuerringes 73 wandern die Rollen 73" auf der einen oder anderen aufsteigenden Ebene der Kurvenbahn 74' (Figur 12), wodurch eine axiale Bewegung des Druckringes 72 und damit auch des Druckkolbens 67 herbeigeführt wird.

Der Steuerring 73 erhält seine Drehbewegung durch Ziehen am Zugseil 75 z.B. eines Bowdenzuges, das über eine Lenkrolle 76 gelenkt wird und in einer Bohrung 86 einer vom Steuerring abstehenden Lasche 87 befestigt ist.

Im vorliegenden Falle sind zwei einander diametral gegenüberliegende Rollen 73" mit zugehörigen Kurvenbahnen 74' vorgesehen. Selbstverständlich können auch mehr, vorzugsweise in gleichen Winkelabständen vorgesehene Rollen 73" und Kurvenbahnen 74' vorhanden sein.

Der Zylinderfortsatz 66 ist druckraumseitig über

0102938

eine Leitung 68 mit einem Zylinder 69 verbunden, welcher mit dem Getriebegehäuse 1 verschraubt ist. In dem Zylinder 69 befindet sich ein Verstellkolben 56". An der diametral gegenüberliegenden Seite des Verstellkolbens 56" ist im Zylinder 1 ein Bolzen 56' mit einem Federteller 56"' axial verstellbar gelagert, an dem sich eine Schraubenfeder 77 mit ihrem einen Ende abstützt, während das andere Ende am Boden eines Zylindergehäuses 78 aufliegt.

Das Radnabenreibradgetriebe weist zwei, vorzugsweise aus Kunststoff bestehende Reibringe 14', 14" auf, welche von einem Stützring 55 getragen sind, an dem sich innenseitig ein einteiliger Tragring 20 über das Kugellager 13 abstützt, welcher seinerseits über die Kugeln 11', 11A' an zwei diametral und spiegelbildlich gegenüberliegenden Stellen einer Halterung in Form eines Abstützteils 56 abgestützt ist, und zur Führung der Kugeln 11', 11A' die im Stammpatent erwähnten Kurvenbahnen bzw. die Nuten 11", 11A" aufweist. Die beiden Abstützteile 56 sind beim vorliegenden Ausführungsbeispiel zu einem gemeinsamen Körper verbunden. Sowohl der Bolzen 56', als auch der Verstellkolben 56" sind an diametral gegenüberliegenden Stellen, beispielsweise durch Schraubverbindung mit dem Abstützteil 56 starr verbunden. Die auf dem Federteller 56"' anliegende Schraubenfeder 77 dient als Rückstellfeder. Das Zylindergehäuse 78 ist mittels eines Gewindes mit dem Getriebegehäuse 1 führungssteif verbunden.

Zur Übertragung der Druckkraft vom Kolben 67 auf den Verstellkolben 56" kann jedes Druckmittel, z.B. kleine Stahlkugeln, Drucköl od.dgl. verwendet werden.

Das solcherart aufgebaute Reibradgetriebe kann für jeden Zweck verwendet werden, bei welchem ein Rad und eine Welle zueinander eine Relativdrehung ausüben. So besteht die Möglichkeit, das Reibradgetriebe für alle Arten von Motorkraftfahrzeugen und Fahrrädern zu verwenden.

Selbstverständlich können im Rahmen der Erfindung verschiedene konstruktive Abänderungen vorgenommen werden. So besteht die Möglichkeit die Kurvenbahnen oder Nuten 11", 11A" in einem der beiden die Kugeln 11', 11A' aufnehmenden Teile 11, 11A bzw. 56 und 20 oder in beiden Teilen vorzugehen, wobei im ersteren Falle der andere Teil nur eine Kugelpfanne besitzt.

Patentansprüche

1. Reibradgetriebe mit stufenlos veränderbarem Übersetzungsverhältnis, mit je einer antreibbaren und einer abtreibenden flach- kegeligen Reibscheibe, welche Reibscheiben gleichachsig und mit ihren konvexen Seiten einander zugewendet sind, mit einem die Achse der Reibscheiben umgebenden, entlang der Erzeugenden der Reibscheiben verschiebbaren Reibring und mit einer Einrichtung zum Anpressen des Reibringes an die Reibscheiben, wobei der Reibring an einem Tragring drehbar gelagert ist und der Tragring auf einer parallel zu der Erzeugenden der Reibscheiben verschiebbaren Halterung angeordnet ist, dadurch gekennzeichnet, daß der Tragring (20, 20X) gegenüber der Halterung (11, 11A, 56) verdrehbar ist und an der Halterung (11, 11A, 56) an mindestens zwei in Winkelabständen voneinander liegenden Stellen mittels je eines Wälzkörpers (11', 11A') abgestützt ist und daß der Tragring (20, 20X) oder die Halterung (11, 11A, 56) für jeden Wälzkörper eine in Umfangsrichtung verlaufende Nut (11", 11A") aufweist, deren Tiefe zu mindestens einem Ende hin allmählich abnimmt.

2. Getriebe nach Anspruch 1, dadurch gekennzeichnet, daß die Halterung von zwei Gleitschuhen (11, 11A) gebildet ist, deren jeder mit einer Vertiefung zur Aufnahme eines Wälzkörpers (11', 11A') versehen ist, und daß zur Führung der Gleitschuhe (11, 11A) aus zwei voneinander diametral gegenüberliegenden Seiten des Getriebegehäuses ausgehende und etwa radial zwischen die Reibscheiben (4, 4A) ragende Lappen (10, 10A) vorgesehen sind, deren jeder eine parallel zur Erzeugenden der jeweils gegenüberliegenden Reibscheibe verlaufende Führungsnut (19, 19A) für je einen Gleitschuh aufweist (Figuren 2 und 7).

3. Getriebe nach Anspruch 1, dadurch gekennzeichnet, daß der Tragring (20, 20X) aus zwei aneinander anliegenden koaxialen Ringen besteht.

4. Getriebe nach einem der vorhergehenden Ansprüche, dadurch gekennzeichnet, daß der Tragring (20, 20X) den Reibring (14) umgibt und von einem Band (21) umschlossen ist, welches mit einer Verstelleinrichtung verbunden ist (Figur 2).

5. Getriebe nach einem der vorhergehenden Ansprüche, dadurch gekennzeichnet, daß die beiden Gleitschuhe (56) Teile eines Tragkörpers sind (Figur 5).

6. Getriebe nach Anspruch 1 oder 2, dadurch gekennzeichnet, daß die Halterung aus zwei einander diametral gegenüberliegenden Anpreßteilen (56) besteht, die zu einem gemeinsamen Körper verbunden sind.

7. Reibradgetriebe nach Anspruch 1, dadurch gekennzeichnet, daß das Getriebe in einen Nabenkörper eingebaut ist, welcher Bestandteil eines Rades bildet und dessen eine seitliche Abschlußwand gleichzeitig die antreibbare oder die abtreibende Reibscheibe (4A, 4) ist und einen durch äußere Kraft gesteuerten Druckzylinder zur Verschiebung der Halterung bzw. Abstützteile (56) trägt.

8. Reibradgetriebe nach Anspruch 7, dadurch gekennzeichnet, daß der Druckzylinder über eine Leitung (68) mit einem in der Diametralachse des Getriebes gelegenen Zylinder (69) verbunden ist, dessen Verstellkolben an der Halterung bzw. am Abstützteil (56) angreift, wobei als Druckmittel Stahlkugeln vorgesehen sind.

9. Reibradgetriebe nach Anspruch 7, dadurch gekennzeichnet, daß der Kolben (67) des Druckzylinders über einen mit einer Kurvenbahn (74') versehenen, axial verstellbaren Kurvenring (74) mit einem Steuerring (73) in Verbindung steht, welcher mit Rollen (73") versehen ist, die auf der Kurvenbahn (74') abrollen und bei Verdrehung des Steuerringes (73) den Kurvenring (74) axial verstellen, wobei der Steuerring (73) an einen vorzugsweise handbetätigten Seilzug (75) z.B. Bowdenzug angeschlossen ist.

10. Reibradgetriebe nach Anspruch 9, dadurch gekennzeichnet, daß mindestens zwei diametral gegenüberliegende Rollen (73") des Steuerringes (73) vorgesehen sind, die um Achsen (73') drehbar gelagert sind, welche im Steuerring (73) radial verlaufend einerseits in diesem und anderseits in einer ringförmigen, mit dem Steuerring (73) konzentrisch umlaufenden Manschette (84) gelagert sind.

FIG.3

FIG.2

FIG.1

0102938

FIG. 4

FIG. 5

FIG. 6

0102938

FIG.7

FIG.8

0102938

FIG.9  FIG.10  FIG.12  FIG.11